**Europäisches Patentamt**

**European Patent Office**

**Office européen des brevets**

(19)

(11) Veröffentlichungsnummer : **0 038 292 B2**

(12) **NEUE EUROPÄISCHE PATENTSCHRIFT**

(45) Veröffentlichungstag der neuen Patentschrift :
28.07.93 Patentblatt 93/30

(51) Int. Cl.$^5$ : **C08K 3/00,** C08K 3/34,
C08L 63/00

(21) Anmeldenummer : **81810047.1**

(22) Anmeldetag : **16.02.81**

(54) Verwendung von synthetischem kristallinem Calciumsilikat.

Die Akte enthält technische Angaben, die nach dem Eingang der Anmeldung eingereicht wurden und die nicht in dieser Patentschrift enthalten sind.

(30) Priorität : 21.02.80 DE 3006440
15.07.80 CH 5414/80

(43) Veröffentlichungstag der Anmeldung :
21.10.81 Patentblatt 81/42

(45) Bekanntmachung des Hinweises auf die Patenterteilung :
05.11.86 Patentblatt 86/45

(45) Bekanntmachung des Hinweises auf die Entscheidung über den Einspruch :
28.07.93 Patentblatt 93/30

(84) Benannte Vertragsstaaten :
AT BE CH DE FR GB IT LI NL SE

(56) Entgegenhaltungen :
EP-A- 0 005 992
CH-A- 577 433
DE-A- 2 810 773
GB-A- 1 385 810
US-A- 2 888 377
US-A- 3 806 585
Ullmanns Encyclopädie der technischen Chemie, Bd. 5, 4. Auflage, 1980, S. 757, Abb. 3
Merkblatt des Handelsproduktes Promaxon (TM)

(56) Entgegenhaltungen :
H. Lee/K. Neville, Handbook of Epoxy Resins, 1976, Nachdruck 1982, S. 14-4 bis 14-7
Temple C. Patton, "Pigment Suspension in Paint Vehicles", Journal of Paint Technology, Vol. 38, Nr. 498, 1966, S. 387-397
Merkblatt des Handelsproduktes Sylodex (TM)
Temple C. Patton, Paint Flow and Pigment Dispersion, 1964, S. 146-155
N.Z. Erdi, M.M. Cruz, O.A. Battista, Journal of Colloid and Interface Science, Vol. 28, Nr. 1, 1968, S. 36-47
Merkblätter der Handelsprodukte NYAD(TM)
R.H.S. Robertson, Chemistry and Industry, 1957, S. 1492-1495
The Chemistry of Cements, Bd. I, 1964, S. 177-179,182,192

(73) Patentinhaber : CIBA-GEIGY AG
Klybeckstrasse 141
CH-4002 Basel (CH)

(72) Erfinder : Munk, Kurt, Dr.
Muttenzerstrasse 28
W-7889 Grenzach (DE)
Erfinder : Skudelny, Dieter
Winandswiese 32
W-5020 Frechen (DE)
Erfinder : Rauth, Gerhard, Dr.
Kurze Strasse 21
W-5000 Köln 40 (DE)

(74) Vertreter : Assmann, Edith, Dr.
Patentanwälte Dr. F. Zumstein sen., Dr. E. Assmann Dipl.-Ing. F. Klingseisen Dr. F. Zumstein jun. Bräuhausstrasse 4
W-8000 München 2 (DE)

EP 0 038 292 B2

## Beschreibung

Die vorliegende Erfindung betrifft die Verwendung von Kristallinem synthetischem Calciumsilikat als sedimentationsverhinderndes Mittel oder zur Herstellung von trockenen und rieselfähigen Mischungen (festen Suspensionen).

Als Füllstoff in Epoxyd- und Polyestergiessharzen, als Füllstoff in Pressmassen und Dichtungsmassen sowie in streich- und giessfähigen Beschichtungen auf der Basis von Epoxyd-, Polyester- und Polyurethanharzen sind unter anderen auch Quarzmehle und Asbest bekannt. Bisher war es üblich, die Füllstoffe vor der Verarbeitung, den Kunststoffansätzen beizumischen. Die mit der Verarbeitung von z.B. Quarzmehlen und Asbest verbundenen Sicherheitsauflagen der Gewerbeaufsichtsbehörden wegen der Silikosegefahr sind aber inzwischen so einschneidend, dass kleinere Hersteller von Kunstoffartikeln sie unter Erhaltung ihrer wirtschaftlichen Konkurrenzfähigkeit nicht mehr erfüllen können.

Die Hersteller der Kunststoffe gehen daher dazu über, die Kunststoffansätze bereits mit Füllstoff versehen zu liefern, um den Verarbeitern das Problem der Handhabung von Füllstoffen zu ersparen. Dies trifft besonders für mit Quarzmehl versehene Epoxydharzansätze zu.

Hierbei tritt jedoch das Problem auf, dass die Füllstoffe bei längerem Stehen der Ansätze sedimentieren und in den Behältern einen nahezu harten, praktisch nicht mehr aufzulösenden und mit vertretbarem Aufwand nicht mehr gleichmässig in der Kunststoffmasse zu verteilenden Bodensatz bilden.

Entsprechende Probleme treten aber nicht nur bei Mischungen auf der Basis von fliessfähigen Kunststoffen auf, sonderen auch bei anorganischen Suspensionen, z.B. bei in Wasserglas suspendierten Calcit.

Es ist bereits bekannt, in derartigen Fällen sogenannte Sedimentationsverhinderer zuzusetzen. d.h. Stoffe, die das Abstetzen der suspendierten Stoffe verlangsamen oder verhindern und dabei gleichzeitig die bei der mechanischen Verarbeitung in Erscheinung tretenden Viskosität der Mischung nicht wesentlich erhöhen.

Derartige Sedimentationsverhinderer sind zum Teil rein chemischer Natur und werden der Mischung in flüssiger Form zugesetzt, wie es beispielsweise bei aus der DE-PS 2 546 810 für einen solchen Zweck bekannten Betainen der Fall ist.

Es sind aber auch bereits Sedimentationsverhinderer in fester Form bekannt, die auch gegenüber dem fliessfähigen Trägermittel der Suspension im wesentlichen inert sind. So wird z.B. für solche Zwecke Asbest verwendet, der eine feinfaserige Kristallitstruktur aufweist und vorwiegend auf mechanische Weise seine sedimentationsverhindernde Wirkung ausübt.

Asbest indessen ist ein Material, dessen gesundheitsschädigende Wirkung in letzter Zeit besonders stark diskutiert wird und bei dem die Tendenz dahin geht, es in allen Anwendungsbereichen und -formen durch andere Stoffe zu ersetzen. Dies ist ferner wünschenswert, weil die sedimentationsverhindernde Wirkung von Asbest (wie z.B. das Handelsprodukt Sylodex 24®) in der zeitlichen Dauer als zu niedrig angesehen wird und die Bildung von Bodensatz in vorgefüllten Mischungen bis zur Anwendung beim Verbraucher nicht verhindert werden kann.

Mit der wirksamen Verhinderung der Sedimentation wird auch eine bessere Entnahme gefüllter und fliessfähiger Systeme, wie polymerisierbare Kunstharze, Reaktivkomponenten für Kunststoffe und flüssiges Kunststoffzusätze, aus ihren Gebinden erzielt.

Eine rückstandslose Entnahme ist jedoch praktisch nicht möglich, sondern die Gebinde müssen für eine Wiederverwendung mit Lösungsmitteln oder mechanisch gereinigt werden, was in manchen Fällen unwirtschaftlich und umweltbelastend sein kann. Es ist nun äusserst wünschenswert, das ungelöste Problem einer praktisch vollständigen Entnahme flüssiger gefüllter Komponenten bzw. Materialien für die Kunststoffherstellung und -verarbeitung zu beseitigen.

Es ist Aufgabe vorliegender Erfindung, einen asbestfreien Sedimentationsverhinderer mit besserer Langzeitwirkung anzugeben, mit dem auch das Problem der rückstandfreien Entnahme aus Gebinden gelöst wird.

Gegenstand ist die Verwendung gemäß Patentanspruch 1.

Bevorzugt enthält die verwendete Mischung

a) 12,5 bis 90, vorzugsweise 20 bis 90 Gew.-% des flüssigen Stoffes,

b) 87,5 bis 10, vorzugsweise 80 bis 10 Gew.-% des Füllstoffes und

c) 0, 5 bis 10 Gew. -%, bezogen auf die Mischung aus a) und b), des synthetischen kristallinen Calciumsilikates.

Der flüssige Stoff ist bevorzugt ein polymerisierbares Kunstharz, eine flüssige Reaktionskomponente für einen Kunststoff oder ein flüssiger Kunststoffzusatz.

Als flüssige Kunstharze kommen z. B, solche in Frage, die unter Einwirkung von Licht, Wärme und/oder Katalysatoren während der Verarbeitung zu duroplastischen Endprodukten polymerisiert werden können, Es handelt sich im wesentlichen um selbstvernetzbare Kunstharze, die im allgemeinen Vorpolymerisate oder Voraddukte sind.

Beispiele für selbstvernetzbare Kunstharze sind:

Phenoplaste aus Aldehyden und gegebenenfalls alkylierten Phenolen, die im basischen Medium hergestellt werden, Aminoplaste wie z, B, Harnstoff formldehydharze oder Melaminformaldehydharze, Alkydharze und ölmodifizierte Alkydharze, ungesättigte Polyester, besonders auf der Basis von Maleinsäure, Epoxidharze, besonders auf Bisphenol-A-Basis, Polyurethane, ungesättigte Polyimide, besonders auf Basis gegebenenfalls C-alkylierter Bismaleinimide, sowie Polysilicone.

Als Epoxidharze kommen vor allem solche mit durchschnittlich mehr als einer an ein Heteroatom (z.B. Schwefel, vorzugsweise Sauerstoff oder Stickstoff) gebundenen Glycidylgruppe, β-Methylglycidylgruppe oder 2,3-Epoxycyclopentylgruppe in Frage; genannt seien insbesondere Bis- (2,3-epoxycyclopentyl)-äther; Di- bzw. Polyglycidyläther von mehrwertigen aliphatischen Alkoholen, wie 1,4-Butandiol, oder Polyalkylenglykolem, wie Polypropylenglykole; Di- oder Polyglycidyläther von cycloaliphatischen Polyolen, wie 2,2-Bis-(4-hydroxycyclohexyl)-propan; Di- bzw. Polyglycidyläther von mehrwertigen Phenolen, wie Resorcin, Bis-(p-hydrocyphenyl)-methan, 2,2-Bis-(p-hydroxyphenyl)-propan ( = Diomethan), 2,2-Bis-(4'-hydroxy-3',5'-dibromphenyl)-propan, 1,1,2,2-Tetrakis-(p-hydroxyphenyl)-äthan, oder von unter sauren Bedingungen erhaltenen Kondensationsprodukten von Phenolen mit Formaldehyd wie Phenol-Novolake und Kresol-Novolake; Di- bzw. Poly-(P-methylglycidyl)-äther der oben angeführten mehrwertigen Alkohole oder mehrwertigen Phenole; Polyglycidylester von mehrwertigen Carbonsäuren, wie Phthalsäure, Terephthalsäure, $\Delta^4$-Tetrahydrophthalsäure und Hexahydrophthalsäure; N-Glycidylderivate von Aminen, Amiden und heterocyclischen Srickstoffbasen, wie N,N-Diglycidylanilin, N,N-Diglycidyltoluidin, N,N ,N',N'-Tetraglycidyl-bis(p-aminophenyl)methan: Triglycidyl-isocyanurat; N,N'-Diglycidyläthylenharnstoff; N,N'-Diglycidyl-5,5-dimethylhydantoin, N,N'-Di-glycidyl-5-isoPropylhydantoin ; N,M'-Diglycidyl-5,5-dimethyl-8-isoPropyl-5,6-dihydro-uracil.

Ferner sind auch flüssige vorreagierte Addukte solcher Epoxidharze mit Härtern für Epoxidharze geeignet.

Die Kunstharze mit funktionellen Gruppen können auch reaktive Bestandteile eines Kunststoffes sein und mit geeigneten Härtern vernetzt oder mit geeigneten Comonomeren modifiziert werden.Ferner kann es sich bei der flüssigen Reaktionskomponente um Monomere für die Polymerherstellung handeln, z.B. um Polyepoxidverbindungen, Polyisocyanate und äthylenische ungesättigte Verbindungen.

Als Härter für Epoxidharze kommen saure oder basische Verbindungen in Frage. Als geeignete Härter seien z.B. genannt: Amine oder Amide, wie aliphatische, cycloaliphatische oder aromatische, primäre, sekundäre und tertiäre Amine, z.B. Monoäthanolamin, Aethylendiamin, Hexamethylendiamin, Trimethylhexamethylendiamin, Diäthylentriamin, Triäthylentetramin, Tetraäthylenpentamin, N,N-Dimethylpropylen-diamin-1,3, N,N-Diäthylpropylendiamin-1,3, 2,2-Bis-(4'-aminocyclo-hexyl)-propan, 3,5,5-Trimethyl-3-(aminomethyl)-cyclohexylamin ("Isophorondiamin"), Mannichbasen, wie 2,4,6-Tris-(dimethylaminomethyl)phenol; m-Phenylendiamin, p-Phenylendiamin, Bis-(4-aminophenyl)methan, Bis-(4-aminophenyl)sulfon, m-xylylendiamin; Addukte von Acrylnitril oder Monoepoxiden, wie Aethylenoxid oder Propylenoxid, an Polyalkylenpolyamine, wie Diäthylentriamin oder Triäthylentetramin; Addukte aus Polyaminen, wie Diäthylentriamin oder Triäthylentetramin, im Ueberschuss und Polyepoxiden, wie Diomethanpolyglycidyläthern; Ketimine, z.B. aus Aceton oder Methylketon und Bis-(p-aminophenyl)-methan; Addukte aus Monophenolen oder Polyphenolen und Polyamiden; Polyamide, insbesondere solche aus aliphatischen Polyaminen, wie Diäthylentriamin oder Triäthylentetramin, und di- oder trimerisierten ungesättigten Fettsäuren, wie dimerisierte Leinölfettsäure (VERSAMID®); polymere Polysulfide (THIO-KOL®); Dicyandiamid, Anilin-Formaldehydharze; mehrwertige Phenole, z.B. Resorcin, 2,2-Bis-(4-hydroxyphenyl)-propan oder Phenol-Formaldehyd-Harze; Bortrifluorid und seine Komplexe mit organischen Verbindungen, wie BF$_3$-Aether-Komplexe und BF$_3$-Amin-Komplexe, z.B. BF$_3$-Monoäthylamin-Komplex; Acetoacetanilid-BF$_3$-Komplex; Phosphorsäure; Triphenylphosphit; mehrbasische Carbonsäuren und ihre Anhydride, z.B. Phthalsäureanhydrid, $\Delta^4$-Tetrahydrophthalsäureanhydrid, Hexahydrophthalsäureanhydrid, 4-Methylhexahydrophthalsäureanhydrid, 3,6-Endomethylen-$\Delta^4$-tetrahydrophthalsäureanhydrid, 4-Methyl-3,6-endomethylen-$\Delta^4$-tetrahydrophthalsäureanhydrid (= Methylnadicanhydrid), 3,4,5,6,7-Hexachlor-3,6-endomethylen-$\Delta^4$-tetrahydrophthalsäureanhydrid, Bernsteinsäureanhydrid, Adipinsäureanhydrid, Trimethyladipinsäureanhydrid, Azelainsäureanhydrid, Sebacinsäureanhydrid, Maleinsäureanhydrid, Decenylbernsteinsäureanhydrid; Pyromellitsäuredianhydrid oder Gemische solcher Anhydride.

Geeignete Härter für Polyisocyanate sind z.B. flüssige, verzweigte Polyester, lineare Polyester, Polyacetale, Polyäther und Polythioäther.

Geeignete Comonomere z.B. für ungesättigte Polyimide sind z.B. äthylenisch ungesättigte Verbindungen wie Styrol, Acrylsäureester oder Methacrylsäureester.

Beispiele für flüssige Kunststoffzusätze sind Polymerisationsbeschleuniger, -katalysatoren oder -initiatoren, reaktive Verdünner, Stabilisatoren gegen den licht- oder wärmeinduzierten Abbau, Weichmacher, Antioxidatien, optische Aufheller, Flammschutzmittel, Verarbeitungshilfsmittel wie Fliess- oder Entformungsmittel.

Beispiele für Beschleuniger für Epoxidharze sind z.B. tertiäre Amine, deren Salze oder quaternäre Ammoniumverbindungen, z.B. 2,4,6-Tris(dimethylaminomethyl)phenol, Benzyldimethylamin, 2-Aethyl-4-methylimidazol, Triamylammoniumphenolat; oder Alkalimetallalkoholate, wie z.B. Natriumhexantriolat, Mono- oder Polyphenole wie Phenol oder Diomethan oder Salicylsäure.

Als mineralischer Füllstoff kommt in Frage: Glas, Quarz, Tonminerale, Feldspate, Silicate, Carbonate, Gesteinsmehle, Tonerde bzw. Tonerdehydrate, Oxide, Kohlenstoff, Carbide oder Sulfate, wobei es sich um synthetische oder natürliche Materialien handeln kann. Beispiele sind: Quarzpulver, Glimmer, Talkum, Asbest, Schiefermehl, Kaolin, Wollastonit, Kreidepulver, Dolomit, Magnesiumcarbonat, Gips, Schwerspat, Aluminiumoxid, Bentone, Kieselsäureaerosol Lithopone, Titandioxid, Russ, Graphit, Metalloxide, Glaspulver, Glaskugeln, Glasfasern, Zinksulfid, Siliciumcarbid, Cristoballit oder eine Mischung von Füllstoffen. Bevorzugt ist Quarzmehl.

Die Füllstoffe können faserförmig bis körnig oder pulverförmig sein und sie können mit Haftvermittlern behandelt sein, die die Bindung des Polymers an die Füllstoffpartikel fördern. Bevorzugt sind feinteilige Füllstoffe, auch solche mit hoher Oberflächenaktivität.

Das kristalline synthetische Calciumsilicat mit verschiedenen Hydratationsstufen weist Partikel mit länglicher Form auf und kann stäbchen- bis nadelförmig oder faserförmig sein. Die Breitenabmessung liegt unter 1 $\mu$m und die innere Oberfläche kann bis ca. 100 m$^2$/g sein. Das Längen/Breitenverhältnis liegt im Bereich von 10:1 bis 200:1. Die Herstellungsmethoden derartiger synthetischer Calciumsilicate sind bekannt und werden im technischen Maßstab durchgeführt. Es handelt sich um Hydrothermalreaktionen, bei denen Kalk und Quarzsand mit Wasser unter Druck bei höheren Temperaturen umgesetzt werden, wobei die Mengenverhältnisse gemäss dem gewünschten Endprodukt variiert werden können und verschiedene Hydratationsstufen erzielt werden.

Als besonders wertvoll hat sich nadelförmig kristallisierendes Xonotlit der Formel $Ca_6[(OH)_2/Si_6O_{17}]$ erwiesen. Ferner ist bandförmig kristallisiertes Calciumsilicat mit einem Längen-/Breitenverhältnis von 100:1 bis 50:1 bevorzugt.

Ein geeignetes Calciumsilicat, das sich in Versuchen bewährt hat, weist z.B. eine Kristallitgrössenverteilung auf, deren Maxima hinsichtlich der Länge bei 0,6 $\mu$m, hinsichtlich der Dicke bei 0,25 $\mu$m und hinsichtlich der Breite bei 0,01 $\mu$m liegen. Dieses Material bietet im Rasterelektronenmikroskop etwa den Anblick von geraden oder leicht gebogenen Bandnudeln.

Es wurde gefunden, dass die beschriebenen Calciumsilicate eine überraschend gute Wirkung als Sedimentationsverhinderer in fliessfähigen Mischungen, besonders Kunststoffansätzen aufweisen.

Das Calciumsilicat muss nur in relativ geringen Mengen zugegeben werden, um ein Sedimentieren der Füllstoffe wirksam zu verhindern. Die Zugabemenge kann sich hierbei nach der Art des Füllstoffes richten.

Die Partikel erfahren in dem fliessfähigen Material der Suspension einen guten Auftrieb und neigen nicht leicht zum Absinken. Die verhältnismässig grosse Länge führt zu einer Verfilzung, die ebenfalls dem Absinken entgegenwirkt und ausserdem die vorhandenen Füllstoffpartikel am Absinken hindert.

Die erfindungsgemässe,Verwendung der Calciumsilikate ergibt eine Art Thioxotropieeffekt, insofern dem Sedimenrieren der Füllstoffartikel quasi eine hohe Viskosität, d.h. ein hoher Absinkwiderstand entgegengesetzt wird, dennoch aber die beim mechanischen Verarbeiten in Erscheinung tretende Viskosität nicht wesentlich erhöht ist.

Die erfindungsgemäss verwendete Mischung kann demnach fliessfähig sein. Bei einem höheren Füllstoffgehalt beobachtet man auch eine gelartige Konsistenz. In solchen Fällen empfiehlt sich vor der Verarbeitung in Erwärmen, um wieder ein fliessfähiges System zu erhalten.

Bei dieser Ausführungsform der Erfindung enthalten die fliessfähigen Mischungen bevorzugt 10 - 80, besonders 10 - 50 Gew.-% an Füllstoffen und das beschriebene Calciumsilicat bevorzugr in Mengen on 0,1 - 10 Gew.-%, besonders 0,5 - 5 Gew.-%, bezogen auf die Gesamtmischung.

Eine wichtige Voraussetzung für die sedimentarionsverhindernde Wirksamkeit des Materials in einer Mischung ist die möglichst homogene Einmischung in die anderen Komponenten, was durch inniges Vermischen der Komponenten in hierfür üblichen Rührkesseln erfolgen kann.

Eine verfahrensmässige Ausgestaltung besteht darin, dass das Calciumsilicat und der Füllstoff gemeinsam vermahlen und dann dem fliessfähigen Kunststoff zugegeben werden. Durch das gemeinsame Vermahlen tritt eine besonders innige Durchmischung der dem fliessfähigen Kunststoff zuzusetzenden Komponenten ein.

Da man die Höchstmenge der Füllstoffe allen Reaktionskomponenten eines Kunstharzes beimischen kann, können relativ hohe Mengen an Füllsoffen einverleibt werden. Werden hohe Füllstoffmengen verwendet, kann die fliessfähige Mischung von weicher gelartiger Konsistenz sein. Vor der Verarbeitung empfiehlt sich dann ein Erwärmen oder ein Vermischen mit flüssigen Härtern.

Die erfindungsgemäss eingesetzten fliessfähigen Mischungen finden vorwiegend als Giess-, Streich- und Tränkharze Verwendung. Es handelt sich um gefüllte Systeme, die lagerstabil sind und wobei das Sedimentieren von Füllstoffen weitgehend unterdrückt ist, was grosse anwendungstechnische Vorteile mit sich bringt, da abgesetzte Füllstoffe oft so hart und schwer entfernbar sind, dass sie nicht mehr verarbeitet werden können.

Es wurde ferner überraschend gefunden, dass bei hohen Füllstoffgehalten durch die Einverleibung des beschriebenen Calciumsilikates trockene und rieselfähige Mischungen erhalten werden, was erhebliche anwendungstechnische Vorteile hat und das Problem der rückstandfreien Entnahme aus Gebinden löst.

Bei dieser Ausführungsform der Erfindung enthält die Mischung

a) 55 bis 10 Gew.-% eines flüssigen Polymerisierbaren Kunstharzes, einer flüssigen Reaktionskomponente für einen Kunststoff oder eines flüssigen Kunststoffzusatzes,

b) 45 bis 90 Gew.-% eines mineralischen Füllstoffes und

c) 0,5 bis 10 vorzugsweise 1,2 bis 10 Gew.-% des synthetischen kristallinen Calciumsilikates.

Besonders enthält diese Mischung Komponente a) zu 45 bis 10, insbesondere 35 bis 15 Gew.-% und Komponente b) zu 55 bis 90, insbesondere 65 bis 85 Gew.-%.

Diese erfindungsgemässen Gemische können durch einfaches Vermischen der Komponenten in hierfür bekannten technischen Einrichtungen wie Rührgefässen hergestellt werden. Zweckmässig werden alle Komponenten zusammengegeben und die Mischung solange gerührt, bis sie in ein festes, trockenes und rieselfähiges Material umgewandelt ist, das zumeist in Krümmel zerfällt. Es ist überraschend, dass bereits mit geringen Mengen von synthetischen Calciumsilikaten die flüssigen bis viskosen mit Füllstoffen versehenen Komponenten a) der erfindungsgemässen Mischung in ein trockenes Material umgewandelt werden können, was bezüglich der Handhabung und Verarbeitung grosse technische Vorteile besitzt.

Der Füllstoff kann vollständig in das Kunstharz oder einen reaktiven Bestandteil eingearbeitet werden, wobei eine gleichmässige Verteilung erhalten bleibt, da keine Entmischung durch Sedimentation mehr erfolgen kann. Rieselfähige Materialien sind viel leichter zu handhaben als viskose Flüssigkeiten. Sie können ohne Verwendung von Hilfsmitteln den Gebinden entnommen werden, wobei praktisch keine Rückstande in den Behältern verbleiben und wodurch Verluste und aufwendige Reinigungen vermieden werden. Ein weiterer Vorteil ist die hohe Lagerstabilität dieser erfindungsgemässen Mischungen und die Umwandlung von flüssigen Giessharzsystem in Pressharze, was eine Erweiterung des Anwendungsbereiches bedeutet. Mit den erfindungsgemässen Kunststoffzusätzen wird eine leichtere Einarbeitung und bessere Verteilung der Zusätze im Substrat erzielt. Trotz der geringen Zugabemenge an synthetischem Calciumsilikat werden uberraschend bereits ausgeprägte bessere mechanische Eigenschaften, z.B. eine erhöhte Biegefestigkeit, in Formteilen aus gehärteren Harzen beobachter.

Die erfindungsgemässen festen rieselfähigen Kunstharze können gegebenenfalls nach Zugabe üblicher Zusätze wie Härtungsbeschleuniger als Pressharze oder aber durch die Zugabe von Flüssigkomponenten wie z.B. reaktiven Verdünnern, bzw. durch Erwärmen verflüssigt oder durch die Zugabe schmelzbarer Komponenten als Giess- oder Streichharze verwendet werden. Erfindungsgemässe Mischungen aus reaktiven Bestandteilen zur Herstellung von Kunststoffen, wie z.B. ein Epoxidharz/Härter-Gemisch, können ebenfalls als Press- und Klebmassen eingesetzt werden. Ferner ist es möglich, diese reaktiven Bestandteile mit flüssigen Reaktanden oder durch Erwärmen zu Giess- oder Streichharzen zu verflüssigen. Als weitere Anwendungsmöglichkeit ergibt sich, aus erfindungsgemässen reaktiven Bestandteilen zur Herstellung von Kunststoffen alleine oder in Kombination mit festen Reaktanden, wie Harz/Härter oder Harz/Härtungsbeschleuniger, relativ lagerstabile härtbare Kompositionen herzustellen. Die Möglichkeit von Grenzflächenreaktionen zwischen Harz- und Härterkomponente verhindern zwar eine unbegrenzte Lagerhaltung, aber die Lagerstabilität genügt, um Einkomponentensysteme an Verarbeiter zu liefern, was besonders vorteilhaft ist. Die erfindungsgemässen Mischungen können unter Druck verflüssigt und daher auch im Kaltpressverfahren verarbeitet werden.

Eine weitere Ausführungsform der Erfindung ist somit auch eine Mischung, welche fest rieselfähig und härtbar ist, worin die flüssige Reaktionskomponente, insbesondere ein Epoxidharz, ein Härter für die Reaktionskomponente, insbesondere für das Epoxidharz, und gegebenenfalls als weiterer Zusatz ein Härtungsbeschleuniger als feste trockene und rieselfähige Mischung gemäss der Ausführungsform der Erfindung vorliegen, oder mindestens eine dieser erfindungsgemäss verfestigten Reaktionskomponenten in Kombination mit einem feinteiligen festen Härter bzw. einer feinteiligen festen Reaktionskomponente, insbesondere einem Epoxidharz, enthalten sind. Das Calciumsilikat ist insbesondere Xonotlit in dieser Ausführungsform.

Mit der erfindungsgemässen Verwendung eines synthetischen kristallinen Calciumsilikates mit einer Breitenabmessung unter 1 μm und einem hohen Längen-/Breitenverhältnis wird überraschend das Problem der asbestfreien Sedimentationsverhinderung in gefüllten flüssigen Substanzen und das Problem der rückstandfreien Entnahme von Giessharzen mit nur einem Wirkstoff gelöst, was als besonders vorteilhaft anzusehen ist. Die sedimentationsverhindernde Wirkung ist zudem oft verbessert.

Die nachfolgenden Beispiele erläutern die Erfindung näher.

**Beispiel 1**

Sedimentationsfreies gefülltes Epoxidharz mit 54,3 Gew.-% Füllstoffanteil.

100 Gew.-T. flüssiges Epoxidharz auf Basis von Bisphenol-A

60 Gew.-T. Quarzmehl

60 Gew.-T. Feinstquarzmehl und

1,5 Gew.-T. Xonotlit

werden mittels eines Rührers innig miteinander vermischt.

Die Mischung wird anschliessend 180 Tage bei Raumtemperatur gelagert, wobei sie in einen gelartigen Zustand übergeht. Es wird keine Sedimentation beobachtet. Nach Vermischen mit einem Anhydridhärter wird die Mischung in Formen gegossen und zu Formkörpern ausgehärtet.

**Beispiel 2**

Sedimentationsfreier, gefüllter Anhydridhärter mit 51,7 Gew.-% Füllstoffanteil.

140 Gew.-T. Phthalsäureanhydrid

100 Gew.-T. Quarzmehl

50 Gew.-T. Feinstquarzmehl

2 Gew.-T. Xonotlit

werden mittels eines Rührers innig vermischt.

Die viskose Mischung wird anschliessend während 180 Tagen bei Raumtemperatur gelagert. In dieser Zeit wird keine Sedimentation beobachtet.

**Beispiel 3**

Sedimentationsfreies, gefülltes Epoxidharz mit 31 Gew.-% Füllstoff.

100 Gew.-T. flüssiges Epoxidharz auf Basis von Bisphenol-A

45 Gew.-T. Quarzmehl

3,6 Gew.-T. Flexibilisator

1 Gew.-T. Farbpaste

1,5 Gew.-T. Xonotlit

werden mittels eines Rührers innig vermischt,

Nach Lagerung der fliessfähigen Mischung während 180 Tagen bei Raumtemperatur zeigt sich keine Sedimentation.

**Beispiel 4**

Sedimentationsfreier Anhydridhärter mit 13 Gew.-% Füllstoffgehalt.

100 Gew.-T. Phthalsäureanhydrid

15 Gew.-T.Aluminiumoxid

3 Gew.-T. Xonotlit

werden mittels eines Rührers innig vermischt.

Die fliessfähige. Mischung ist nach 100 Tagen Lagerung bei Raumtemperatur praktisch frei von Sedimentationsrückständen.

**Beispiel 5**

Zur Beurteilung der Beeinflussung des Sedimentationsverhältnis einer Suspension mit 50 Gew.-% Füllstoff (Calcit) in flüssigem Epoxydharz auf Basis von Bisphenol A wurden Proben ohne weiteren Zusatzstoff und Proben mit steigenden Anteilen an bandförmig kristallisiertem Calciumhydrosilikat untersucht, welches eine Kristallitgrössenverteilung aufwies, deren Maxima aus rasterelektronenmikroskopischen Aufnahme hinsichtlich der Länge bei etwa 0,6 $\mu$m, hinsichtlich der Dicke bei 0,25 $\mu$m und hinsichtlich der Breite bei 0,01 $\mu$m bestimmt wurden. Es wurde die Viskosität des Systems mit einem Brookfield- Rotationsviskosimerer bestimmt.

Folgende Werte wurden ermittelt.

Nullversuch 2 x $10^4$ cP

2 % Calciumhydrosilikat 3 x $10^4$ cP

3 % Calciumhydrosilikat 4 x $10^4$ cP

5 % Calciumhydrosilikat 7 x $10^4$ cP

Die angegebenen Prozentwerte beziehen sich auf die Gesamtmenge.

Die Proben wurden über 12 Monate gelagert. Nach diesem Zeitraum war bei dem Nullversuch praktisch unlöslich zementiert. Bei den Proben, die als Zusatzstoff das bandförmige Calciumsilikat enthielten, liess sich der Bodensatz ohne wesentliche mechanische Einwirkung leicht wieder zu einer homogenen Suspension aufrühren.

## Beispiel 6

Quarz- und Cristobalitmehle wurden einesteils ohne und anderenteils mit Zusatz von Xonotlit in Epoxydharz eingemischt und die Neigung der Suspension zur Sedimentation untersucht. Das Untersuchungsprogramm umfasste den Bereich:

62 bis 20 Gew.-% Füllstoff (Quarz- oder Cristobalitmehl)

38 bis 80 Gew.-% Epoxydharz

Die Xonotlit enrhaltenden Proben umfassten verschiedene Anteile desselben bis etwa maximal 5 Gew.-% von der Gesamtmenge.

Nach viermonatiger Lagerung war bei den Proben ohne Xonotlit der Füllstoff vollständig auf den Boden abgesunken und bildete dort eine feste, nur mit grosser Anstrengung aufzurührende und schon gar nicht mehr gleichmässig in dem Epoxydharz zu verteilende Masse.

Bei den Proben mit Xonotlit liess sich eventuell gebildeter Boden-Satz ohne wesentliche mechanische Einwirkung wieder zu einer gleichmässigen Suspension aufrühren.

## Beispiel 7

Aus den in folgender Tabelle angegebenen Bestandteilen wird mittels innigem Rühren eine fliessfähige Mischung hergestellt.

Diese Mischung wird mit Hexahydrophthalsäureanhydrid als Härter und einem Härtungsbeschleuniger (auf Amin/Alkoholatbasis) in ein

Giessharz überführt (Verhältnis von Mischung: Härter: Beschleuniger 100:20:0,5). An dieser Mischung bzw. ausgehärteten Formkörpern werden die in der Tabelle angegebenen Eigenschaften bestimmt.

**Tabelle**

| Gemisch | | |
|---|---|---|
| Cycloaliphatischer Epoxidester | 23,6 | Gew.-T. |
| Quarzmehl (F 600) | 23,6 | Gew.-T. |
| Quarzmehl (W 12) | 25,7 | Gew.-T. |
| Quarzmehl (W 6) | 26,22 | Gew.-T. |
| Farbpasten | 0,722 | Gew.-T. |
| Xonotlit | 0,12 | Gew.-T. |

| Prüfungen | |
|---|---|
| Martenswert | 103°C |
| Kriechstromfestigkeit | KA 3 C |
| Umbruchwert an Stützteil | 6487 N |
| Gelierzeit nach DIN | 2 min. 58 sec. |
| Gelierzeit nach Gelnorm | 4 min. 46 sec. |
| Gabrauchsdauer bei 50°C | 10 Stunden |
| Viskositätsverlauf bei 50°C | in 8 Stunden von 1250 auf 3400 mPas |
| Sedimentation bei 50°C (Harz + Härter) | keine, nach 7 Tagen noch verarbeitbar |

## Beispiel 8

Herstellung einer festen rieselfähigen Harzkomponente aus einem Flüssigharz

100 g Hexahydrophthalsäurediglycidylester (Epoxidgehalt: 5,5 bis 6,3 VaL/kg)

126 g Feinstquarzmehl

210 g Quarzmehl

12 g synthetisches Calciumsilikat (Xonotlit)

werden bei Raumtemperatur in eine Weissblechbüchse zusammengewogen und mit einem Flügelrührer bei Raumtemperatur während ca. 1 Minute bei 1300 RPM vermischt. Dabei bilden sich rieselfähige Krümel von ca. 2 mm Durchmesser.

Ein Muster dieses trockenen Stoffes wird in einer Glasflasche mit Schraubdeckel in einem Trockenschrank bei 60°C für 6 Monate gelagert. Es tritt kein Zusammenbacken ein.

Durch einfaches Ausschütten kann der gesamte Inhalt entleert werden.

**Beispiel 9**

Herstellung einer festen rieselfähigen Härterkomponente aus einem flüssigen Härter

100 g Isomerisiertes Methyltetrahydrophthalsäureanhydrid mit einer Viskosität von 50 bis 100 cP bei 25°C

305 g Quarzmehl

140 g Feinstquarzmehl

7,1 g synthetisches Calciumsilikat (Xonotlit)

werden bei Raumtemperatur in eine Weissblechbüchse zusammengewogen und mit einem Flügelrührer bei Raumtemperatur während ca. 1 Minute bei 1300 RPM vermischt. Dabei bildet sich ein rieselfähiges Pulver mit 2 bis 4 mm grossen Krümeln.

Ein Muster dieses trockenen Stoffes wird in einer Glasflasche mit Schraubdeckel in einem Trockenschrank bei 60°C für 6 Monate gelagert. Es tritt kein Zusammenbacken ein.

Durch einfaches Ausschütten kann der gesamte Inhalt entleert werden.

**Beispiel 10**

Herstellung eines trockenen rieselfähigen Beschleunigers aus einem flüssigen Beschleuniger

100 g eines Härtungsbeschleunigers aus Polypropylenglykol 425, das etwa 2 Gew.-% des entsprechenden Natriumalkoholates enthält,

200 g Quarzmehl

160 g Feinstquarzmehl

16 g synthetisches Calciumsilikat (Xonotlit)

werden bei Raumtemperatur in eine Weissblechbüchse zusammengewoben und mit einem Flügelrührer bei Raumtemperatur während ca. 1 Minute bei 1300 RPM vermischt. Dabei bildet sich ein rieselfähiges Pulver.

Ein Muster dieses trockenen Stoffes wird in einer Glasflasche mit Schraubdeckel in einem Trockenschrank bei 60°C für 6 Monate gelagert.

Durch einfaches Ausschütten kann der gesamte Inhalt entleert werden.

**Beispiel 11**

Herstellung einer rieselfähigen Mischung aus einem flüssigen Epoxidharz und einem flüssigen Beschleuniger

100 g Epoxidharz gemäss Beispiel 8 werden mit 50 g Beschleuniger gemäss Beispiel 10 bei Raumtemperatur in eine Weissblechbüchse zusammengewogen und mittels eines Flügelrührer vermischt. Danach werden

128 g Quarzmehl

106 g Feinstquarzmehl

16 g synthetisches Calciumsilikat (Xonotlit)

dazugewoben und während ca. 1 Minute bei 1300 RPM bei Raumtemperatur vermischt. Es ergibt sich ein pulverförmiges, kleine Krümel enthaltendes Produkt.

Die Mischung ist für etwa 1 Monat lagerbeständig.

**Beispiel 12**

Herstellung einer rieselfähigen härtbaren Epoxidharzmischung aus flüssigen Reaktanden.

100 g der Mischung gemäss Beispiell 11 und

80 g Phthalsäureanhydrid

werden bei Raumtemperatur in eine Weissblechbüchse zusammengewogen und mit einem Flügelrührer während 1 Minute bei 1300 RPM vermischt.

Dabei bilden sich rieselfähige Krümel von 2 bis 3 mm Durchmesser. Durch einfaches Ausschütten kann der gesamte Inhalt entleert werden.

Diese rieselfähige härtbare Mischung ist für etwa 1 Monat lagerbeständig.

**Beispiel 13**

Das rieselfähige Epoxidharz gemäss Beispiel 8 wird in eine Weissblechbüchse eingewogen und mit einer Heizplatte unter Rühren auf 100°C erwärmt, dann wird der auf 60°C vorgewärmte Härter und Beschleuniger, wie in den Beispielen 9 bzw. 10 erwänt, unter Rühren zugegeben. Anschliessend wird das System mit einem Flügelrührer homogenisiert und bei 80°C in Formen vergossen und gehärtet (Viskosität bei 80°C: 7000 bis 10000 m Pa s).

Bei einem zweiten Versuch wird, vor der Härterzugabe, die rieselfähige Harzkomponente in einem Trockenschrank auf die gewünschte Temperatur gebracht. Der Mischvorgang bleibt unverändert.

**Beispiel 14**

Der rieselfähige Härter gemäß Beispiel 9 wird in eine Weissblechbüchse eingewogen und mit einer Heizplatte unter Rühren auf 100°C erwärmt, dann wird ein auf ca. 60°C vorgewärmtes flüssiges Epoxidharz (Epoxidharz auf Bisphenol-A-Basis mit 8,6 Gew.-Teilen Butylenglykoldiglycidyläther, Epoxidgehalt ca. 5,5 Val/kg) und der Beschleuniger (wie in Beispiel 10 erwähnt) unter Rühren zugegeben. Anschliessend wird das System mit einem Flügelrührer homogenisiert und bei 80°C in Formen vergossen und gehärter (Viskosität bei 80°C: 14000 bis 17000 mPa s).

Gegebenenfalls kann auch hier die rieselfähige Härterkomponente in einem Trockenschrank auf die gewünschte Temperatur gebracht werden.

**Beispiel 15**

Die gefüllte Harz-Beschleuniger-Mischung gemäss Beispiel 11 wird in eine Weissblechbüchse eingewogen und mit einer Heizplatte unter Rühren auf ca. 100°C erwärmt, dann wird der auf 60°C vorgewärmte Härter Hexahydrophthalsäureanhydrid unter Rühren zugegeben.

Anschliessend wird mit einem Flügelrührer homogenisiert und bei 80°C in Formen vergossen und ausgehärtet.

**Beispiel 16**

Die erforderliche Menge des rieselfähigen Gemisches gemäss Beispiel 12 wird in eine Weissblechbüchse eingewogen, mit einer Heizplatte unter Rühren aufgeschmolzen und homogenisiert, um dann bei 110°C bis 120°C in Formen vergossen und gehärtet zu werden.

**Beispiel 17**

**Kreidemehl-gefülltes Epoxidharzsystem**

100 Gew.-Teile eines aus Bisphenol A und Epichlorhydrin hergestellten Epoxidharzes mit einem Epoxidgehalt von 5,3 Aequivalenten pro kg werden mit 330 Gew.-Teilen Kreidemehl (62,26 % bezogen auf die spätere Gesamtmischung) und 0,5 Gew.-Teilen XONOTLIT VP 633 bis 330® (der Firma Quarzwerke Frechen BRD) in einem Edelstahlbehälter mit einem Turborührer bei 3000 Umdrehungen pro Minute innerhalb 2 Minuten zu einem rieselfähigen nicht staubenden Granulat gemischt. Das Granulat kann in Plastikbeuteln ohne Benetzung der Folienoberfläche gelagert werden.

Zur Herstellung einer giessfähigen Mischung werden 100 Gew.-Teile modifizierter Anhydridhärter in einem Gefäss mit Rührer auf 120°C aufgewärmt und das rieselfähige Granulat rasch zugegeben und danach 0,2 Gew.-Teile eines anionischen Beschleunigers. Die noch heisse Giessharzmischung wird zur Herstellung von Formkörpern in Formen gegossen und ausgehärtet.

**Beispiel 18**

**Flammhemmendes Giessharzsystem mit $Al_2O_3$-3 $H_2O$**

100 Gew.-Teile eines aus Bisphenol A und Epichlorhydrin hergestellten Epoxidharzes mit einem Epoxidgehalt von 5,2 Aequivalenten pro kg werden mit 100 Gew.-Teilen Quarzmehl Sikron®, 170 Gew.-Teilen Aluminiumoxidtrihydrat und 0,5 Gew.-Teilen XONOTLIT VP 633 - 330® in einem Edelstahlbehälter mit einem Turborührer bei 3000 Umdrehungen pro Minute innerhalb 2 Minuten in ein rieselfhiges, trokkenes, nicht zusammenbackendes Granulat überführt. Diese gefüllte, trockene Harzmischung wird unter Rühren zu 80 Gew.-Teilen eines auf 80°C vorgewärmten modifizierten Anhydridhärters zugegeben und mit 0,2 Gew.-Teilen eines anionischen Beschleunigers aktiviert. Die dabei erhaltene ca. 60°C warme Giessharzmischung kann in Formen vergossen werden. Nach 16 Stunden Aushärtung der Mischung bei 130°C werden flammhemmende Formteile erhalten (UL-V-0).

**Patentansprüche**

1.    Verwendung von kristallinem synthetischem Calciumsilikat verschiedener Hydratationsstufen, das ein hohes Längen/Breitenverhältnis von 10:1 bis 200:1 und Breitenabmessungen unter 1 μm aufweist, als Zusatz zur Sedimentationsverhinderung in einer Mischung auf Basis eines flüssigen Stoffes mit einem mineralischen, feinteiligen, suspendierten Füllstoff.

2.    Verwendung gemäss Anspruch 1, dadurch gekennzeichnet, dass die Mischung ein flüssiges polymerisierbares Kunstharz, eine flüssige Reaktionskomponente für einen Kunststoff oder einen flüssigen Kunststoffzusatz enthält.

3.    Verwendung gemäss Anspruch 2, dadurch gekennzeichnet, dass das flüssige Kunstharz ein Epoxidharz, ungesättigtes Polyesterharz, Polyurethanharz, Phenol/Formaldehydharz, Harnstoff- oder Melamin/Formaldehydharz, ölmodifiziertes Alkydharz, Polysilicon oder ungesättigtes Polyimid, die flüssige Reaktionskomponente ein Härter oder ein Monomeres für die Polymerherstellung und der flüssige Kunststoffzusatz ein Polymerisationsbeschleuniger, ein Polymerisationsinitiator, ein Stabilisator gegen den licht- oder wärmeinduzierten Polymerabbau, ein Antioxidants, ein Weichmacher, ein Flammschutzmittel oder ein Verarbeitungshilfsmittel ist.

4.    Verwendung gemäss Anspruch 1, dadurch gekennzeichnet, dass die Mischung
a) 12,5 bis 90, vorzugsweise 20 bis 90 Gew.-% des flüssigen Stoffes,
b) 87,5 bis 10, vorzugsweise 80 bis 10 Gew.-% des Füllstoffes und
c) 0,1 bis 10 Gew.-%, bezogen auf die Mischung aus a) und b), des synthetischen kristallinen Calciumsilikates enthält.

5.    Verwendung gemäss Anspruch 1, dadurch gekennzeichnet, dass der mineralische Füllstoff Quarzpulver, Glimmer, Talkum, Asbest, Schiefermehl, Kaolin, Wollastonit, Kreidepulver, Dolomit, Magnesiumcarbonat, Gips, Schwerspat, Aluminiumoxid, Bentone, Kieselsäureaerosol, Lithopone, Titandioxid, Russ, Graphit, Metalloxide, Glaspulver, Glaskugeln, Glasfasern, Zinksulfid, Siliciumcarbid, Cristoballit oder eine Mischung von solchen Füllstoffen ist.

6.    Verwendung gemäss Anspruch 1, dadurch gekennzeichnet, dass nadelförmig kristallisiertes Xonotlit $(Ca_6[(OH)_2/Si_6O_{17}]$ oder bandförmig kristallisiertes Calciumsilikat mit einem Längen-/Breitenverhältnis von 100:1 bis 50:1 und Breitenabmessungen unter 1 μm eingesetzt wird.

7.    Verwendung gemäss Anspruch 4, wobei als flüssiger Stoff ein härterfreies Epoxidharz sowie ein kristallines Calciumsilikat gemäss Anspruch 6 eingesetzt wird.

8.    Mischung gemäss Anspruch 4, die fest und rieselfähig ist und die,
a) 55 bis 10 Gew.-% eines flüssigen polymerisierbaren Kunstharzes, einer flüssigen Reaktionskomponente für einen Kunststoff oder eines flüssigen Kunststoffzusatzes,
b) 45 bis 90 Gew.-% eines mineralischen Füllstoffes und
c) 0,5 bis 10, vorzugsweise 1,2 bis 10 Gew.-% des synthetischen kristallinen Calciumsilikates gemäß Anspruch 1 enthält.

9.    Mischung gemäss Anspruch 8, dadurch gekennzeichnet, dass die Komponente a) zu 35 bis 15 Gew.-% und die Komponente b) zu 65 bis 85 Gew.-% enthalten ist.

10.   Mischung gemäss Anspruch 8, welche fest, rieselfähig und härtbar ist, worin die flüssigen Reaktionskomponenten ein Epoxidharz und ein Härter hierfür sind und gegebenenfalls als Kunststoffzusatz ein Härtungsbeschleuniger zugegen ist, oder eine dieser Reaktionskomponenten in Kombination mit einem feinteiligen festen Härter bzw. Epoxidharz enthalten ist.

**11.** Mischung gemäss Anspruch 8, welche als Calciumsilikat kristallines, synthetisches Xonotlit der Formel $[Ca_6(OH)_2Si_6O_{17}]$ enthält.

**12.** Verwendung von kristallinem synthetischem Calciumsilikat verschiedener Hydratationsstufen, das ein hohes Längen/Breitenverhältnis von 10:1 bis 200:1 und Breitenabmessungen unter 1 $\mu$m aufweist, zur Herstellung von rieselfähigen festen Mischungen aus mit mineralischen Füllstoffen versehenen flüssigen polymerisierbaren Kunstharzen, flüssigen Reaktionskomponenten für einen Kunststoff oder flüssigen Kunststoffzusätzen.

## Claims

**1.** Use of crystalline synthetic calcium silicate in different stages of hydration which has a high length/width ratio of 10:1 to 200:1 and width dimensions of less than 1 $\mu$ as additive for preventing sedimentation in a mixture based on a liquid substance with a mineral, finely particulate suspended filler.

**2.** Use according to claim 1, wherein the mixture contains a liquid polymerisable synthetic resin, a liquid reactant for a plastics material or a liquid additive for a plastics material.

**3.** Use according to claim 2, wherein the liquid synthetic resin is an epoxy resin, an unsaturated polyester resin, a polyurethane resin, a phenol/formaldehyde resin, a urea/formaldehyde or melamine/formaldehyde resin, an oil-modified alkyd resin, a polysilicone or unsaturated polyimide, the liquid reactant is a hardener or a monomer for the preparation of the polymer, and the liquid additive for a plastics material is a polymerisation accelerator, a polymerisation initiator, a stabiliser against light- or heat-induced polymer degradation, an antioxidant, a plasticiser, a flame retardant or a processing assistant.

**4.** Use according to claim 1, wherein the mixture contains
a) 12.5 to 90 % by weight, preferably 20 to 90 % by weight, of the liquid substance,
b) 87.5 to 10 % by weight, preferably 80 to 10 % by weight, of the filler, and
c) 0.1 to 10 % by weight, based on the mixture of a) and b), of the synthetic crystalline calcium silicate.

**5.** Use according to claim 1, wherein the mineral filler is quartz powder, mica, talcum, asbestos, powdered slate, kaolin, wollastonite, chalk powder, dolomite, magnesium carbonate, gypsum, barytes, alumina, bentones, silica aerosol, lithopones, titanium dioxide, carbon black, graphite, metal oxides, glass powder, glass beads, glass fibres, zinc sulfide, silicon carbide, crystobalite or a mixture of such fillers.

**6.** Use according to claim 1, which comprises the use of needle-shaped crystallised xonotlite $(Ca_6[(OH)_2/Si_6O_{17}]$ or ribbon-shaped crystallised calcium silicate having a width/length ratio of 100:1 to 50:1 and width dimensions of less than 1 $\mu$.

**7.** Use according to claim 4, which comprises the use of a hardener-free epoxy resin as well as a crystalline calcium silicate according to claim 6.

**8.** A mixture according to claim 4, which is solid and free-flowing and contains
a) 55 to 10 % by weight of a liquid polymerisable synthetic resin, of a liquid reactant for a plastics material or of a liquid additive for a plastics material,
b) 45 to 90 % by weight of a mineral filler, and
c) 0.5 to 10 % by weight, preferably 1.2 to 10 % by weight, of the synthetic crystalline calcium silicate according to claim 1.

**9.** A mixture according to claim 8, which contains 35 to 15 % by weight of component a) and 65 to 85 % by weight of component b).

**10.** A mixture according to claim 8, which is solid, free-flowing and curable, wherein the liquid reactants are an epoxy resin and a hardener therefor, and which contains a curing accelerator as optional additive for a plastics material, or contains one of said reactants in conjunction with a finely particulate solid hardener

EP 0 038 292 B2

or epoxy resin.

11. A mixture according to claim 8, which contains crystalline synthetic xonotlite of formula $(Ca_6[(OH)_2/Si_6O_{17}]$ as calcium silicate.

12. Use of crystalline synthetic calcium silicate in different stages of hydration which has a high length/width ratio of 10:1 to 200:1 and width dimensions of less than 1 $\mu$ for the preparation of free-flowing solid mixtures of liquid polymerisable synthetic resins, liquid reactants for a plastics material or liquid additives for a plastics material, which synthetic resins, liquid reactants and liquid additives contain mineral fillers.

## Revendications

1. Emploi de silicate de calcium synthétique cristallisé de différents degrés d'hydratation, ayant un rapport longueur/largeur de 10:1 à 200:1 et des dimensions en largeur inférieures à 1 $\mu$m, comme additif inhibant la sédimentation dans un mélange d'une matière liquide avec une charge minérale finement divisée en suspension.

2. Emploi selon la revendication 1, caractérisé en ce que le mélange contient une résine synthétique polymérisable liquide, un constituant réactif liquide pour une matière plastique ou un additif liquide pour matière plastique.

3. Emploi selon la revendication 2, caractérisé en ce que la résine synthétique liquide est une résine époxyde, une résine de polyester insaturé, une résine de polyuréthanne, une résine de phénol/formaldéhyde, une résine d'urée/ formaldéhyde ou de mélamine/formaldéhyde, une résine alkyde modifiée par une huile, une polysilicone ou un polyimide insaturé, le constituant réactif liquide est un durcisseur ou un monomère destiné à la préparation d'un polymère, et l'additif liquide pour matière plastique est un accélérateur de polymérisation, un amorçeur de polymérisation, un stabilisant vis-à-vis d'une dégradation du polymère sous l'influence de la lumière ou de la chaleur, un anti-oxydant, un plastifiant, un retardateur de flamme ou un auxiliaire de mise en oeuvre.

4. Emploi selon la revendication 1, caractérisé en ce que le mélange contient
   a) 12,5 à 90, de préférence 20 à 90 % en poids de la substance liquide,
   b) 87,5 à 10, de préférence 80 à 10 % en poids de la charge et
   c) 0,1 à 10 % en poids, sur la base du mélange a) et b), du silicate de calcium cristallin synthétique.

5. Emploi selon la revendication 1, caractérisé en ce que la charge minérale est de la poudre de quartz, du mica, du talc, de l'amiante, de la poudre d'ardoise, du kaolin, de la wollastonite, de la poudre de craie, de la dolomite, du carbonate de magnésium, du gypse, de la barytine, de l'oxyde d'aluminium, de la bentonite, un aérosol silicieux, des lithopones, du dioxyde de titane, du noir de carbone, du graphite, des oxydes métalliques, de la poudre de verre, des billes de verre, des fibres de verre, du sulfure de zinc, du carbure de silicium, de la cristobalite ou un mélange de ces charges.

6. Emploi selon la revendication 1, caractérisé en ce que l'on utilise de la xonotlite $(Ca_6[ (OH)_2/Si_6O_{17}])$ à cristallisation aciculaire ou du silicate de calcium à cristallisation rubaneuse, ayant un rapport longueur/largeur de 100:1 à 50:1 et des dimensions en largeur inférieures à 1 $\mu$m.

7. Emploi selon la revendication 4, dans lequel on utilise comme matière liquide une résine époxyde exempte de durcisseur, ainsi qu'un silicate de calcium cristallin selon la revendication 6.

8. Mélange selon la revendication 4, solide et fluent, et qui contient
   a) 55 à 10 % en poids d'une résine synthétique polymérisable liquide, d'un constituant réactif liquide pour une matière plastique ou d'un additif liquide pour matière plastique,
   b) 45 à 90 % en poids d'une charge minérale, et
   c) 0,5 à 10, de préférence 1,2 à 10 % en poids du silicate de calcium cristallin synthétique de la revendication 1.

9. Mélange selon la revendication 8, caractérisé en ce que le mélange contient 35 à 15 % en poids du constituant a) et 65 à 85 % en poids du constituant b).

12

10. Mélange selon la revendication 8, qui est solide, fluent et durcissable, dans lequel les constituants de réaction liquides sont une résine époxyde et un durcisseur pour cette dernière, et dans lequel on ajoute éventuellement un accélérateur de durcissement en tant qu'additif pour matière plastique, ou bien qui contient l'un de ces constituants réactifs en combinaison avec un durcisseur ou une résine époxyde solide finement divisé.

11. Mélange selon la revendication 8, qui contient en tant que silicate de calcium de la xonotlite synthétique cristalline de formule $[Ca_6(OH)_2Si_6O_{17}]$.

12. Utilisation d'un silicate de calcium synthétique cristallin à différents degrés d'hydratation, qui présente un rapport longueur/largeur élevé, de 10:1 à 200:1, et des dimensions en largeur inférieures à 1 $\mu$m, pour préparer des mélanges solides fluents à partir de résines synthétiques polymérisables liquides contenant des charges minérales, des constituants réactifs liquides pour une matière plastique ou des additifs liquides pour matières plastiques.